Europäisches Patentamt

European Patent Office

Office européen des brevets

(11) Veröffentlichungsnummer: **0 570 887 A1**

## (12) EUROPÄISCHE PATENTANMELDUNG

(21) Anmeldenummer: **93108015.4**

(22) Anmeldetag: **17.05.93**

(51) Int. Cl.5: **G21D 3/04**, G05B 9/03

(30) Priorität: **20.05.92 DE 4216698**

(43) Veröffentlichungstag der Anmeldung:
**24.11.93 Patentblatt 93/47**

(84) Benannte Vertragsstaaten:
**CH DE ES FR LI NL**

(71) Anmelder: **SIEMENS AKTIENGESELLSCHAFT**
**Wittelsbacherplatz 2**
**D-80333 München(DE)**

(72) Erfinder: **Aleite, Werner, Dipl.-Ing.**
**Hohe Warte 6**
**W-8521 Spardorf(DE)**

(54) **Verfahren und Einrichtung zum automatischen Schutz einer Anlage, insbesondere eines Kernkraftwerks.**

(57) Gemäß dem Verfahren zum automatischen Schutz einer Anlage, insbesondere eines Kernkraftwerks, werden mit einem Rechennetzwerk (C1-C45) Eingangssignale aus der Anlage redundant erfaßt, verarbeitet und Ausgangssignale in Form von Auslöse- und/oder Stellbefehlen für Stellglieder (V8) abgegeben, wenn vorgegebene Kriterien erfüllt sind. Im einzelnen werden

a) in mindestens zwei jeweils mehrkanaligen und zueinander ereignis- und symptom-orientiert diversitären Rechensystemen (C1-C3) aus den Eingangssignalen über Signalbewertungsstufen (SBS) Informationen erzeugt, die

b) mindestens zwei Signalvorrangstufen (SVS1, SVS2) zugeführt werden, welche die Informationen nutzen, um störungs-, störfall- oder situationssignifikante Identifizierungskriterien ($X_k$, $X_1$ - $X_6$) zu ermitteln. Mittels mindestens einer nachgeschalteten und zur Ansteuerung von Stellgliedern (V8) vorgesehenen Maßnahmen-Auswahlstufe (MAS, M1 - M5) wird vorzugsweise abhängig von die Wahrscheinlichkeit korrekter Identifizierung angebenden Kennzahlen jeweils der Maßnahmenkombination Vorrang gewährt, die die optimalen Gegenmaßnahmen gegen die von dem entsprechenden Identifizierungskriterium ($X_k$, $X_1$ - $X_6$) identifizierte Störung oder unzulässige Situation betrifft. Gegenstand der Erfindung ist auch eine das Verfahren anwendende leittechnische Schutz- und Überwachungseinrichtung.

FIG 3

Rank Xerox (UK) Business Services
(3.10/3.6/3.3.1)

EP 0 570 887 A1

Die Erfindung bezieht sich auf ein Verfahren zum automatischen Schutz einer Anlage, vorzugsweise zum Schutz eines Kraftwerks, insbesondere eines Kernkraftwerks, wobei mit einem Rechennetzwerk Eingangssignale aus der Anlage redundant erfaßt und verarbeitet und Ausgangssignale in Form von Auslöse- und/oder Stellbefehlen für Stellglieder abgegeben werden, wenn vorgegebene Kriterien erfüllt sind.

Für die leittechnische Überwachung einer Anlage, insbesondere eines Kraftwerks, und in noch verstärktem Maße für den leittechnischen Schutz eines Kernkraftwerks sind für die Festlegung des Schutzkonzeptes und die Auswahl der Gerätetechnik folgende Kriterien maßgebend: größtmögliche Sicherheit, hohe Verfügbarkeit und bestmögliche Wirtschaftlichkeit. Das Kriterium "größtmögliche Sicherheit" hat absoluten Vorrang vor allen anderen. Das Kriterium "hohe Verfügbarkeit" ergibt sich aus den relativ hohen Investitionskosten und den großen Einheitsleistungen sowie - bei Kernkraftwerken - aus den niedrigeren Betriebskosten im Vergleich zu fossil beheizten Kraftwerken. Unter dem Kriterium "bestmögliche Wirtschaftlichkeit" ist insbesondere der materialschonende Betrieb und die optimale Ausnutzung des Brennstoffs zu verstehen.

Die Leittechnik kann in zwei Teilbereiche aufgeteilt werden, in die Sicherheitsleittechnik und in die betriebliche Leittechnik. Die vorliegende Erfindung befaßt sich vorwiegend mit der Sicherheitsleittechnik, deren Funktionsfähigkeit durch redundanten Aufbau und/oder durch selbsttätige Funktionsprüfung oder andere Maßnahmen dauernd sichergestellt wird, die jedoch im völlig ungestörten Betrieb keine Aktionen auszuführen hat. Im Anforderungsfall haben die Systeme der Sicherheitsleittechnik Vorrang vor allen Aktionen der betrieblichen Leittechnik. Zur Sicherheitsleittechnik zählen bei einem Kernreaktor der Reaktorschutz, die Reaktor-Begrenzungen und in begrenztem Maße die Reaktorregelung und das Informationssystem.

Bei Einsatz der bisherigen analog/binären Geräte- und Systemtechnik für die Reaktor-Sicherheitsleittechnik wurden mit Rücksicht auf die begrenzten Möglichkeiten dieser Technik, aber auch die geforderte Zuverlässigkeit der Funktionen, möglichst einfache Funktionen vorgesehen. Dies gilt sowohl für die Störungserkennung als auch für die Entscheidung der Durchführung von (Abhilfe-)Maßnahmen.

Durch die Erfindung soll ein Verfahren der eingangs genannten Art geschaffen werden, welches nicht nur bei Verwendung analoger, sondern auch bei Verwendung digitaler, rechnergestützter Leittechnik mindestens denselben Global-Funktionsumfang bei nennenswert verbessertem Detail der Auslegung aufweist wie die bisherigen leittechnischen Schutz- und Überwachungsverfahren auf der Basis von Analog-/Binärtechnik, und dies, obwohl das Qualifizierungsverfahren für digitale Leittechnik andersartig und - insbesondere was die Software angeht - schwieriger ist. Für die höchst zuverlässigen Funktionen der einfachen (analogen/binären) Schutztechnik wurden bisher viele parallel verarbeitete Meßgrößen auf Grenzwerte und einfache Kriterien überwacht und das Erreichen von Ansprechwerten - (binär) zwei-vondrei oder zwei-von-vier ausgewertet - als Erkennungskriterium einer Störung verwendet, wobei jeden Störfall mindestens je zwei dieser Erkennungskriterien erkennen müssen und bestimmte Maßnahmen auslösen. Vorrangbildung wird durch logischen Vorrang binärer Signale in der Betätigungsebene erzielt.

Durch die vorliegende Erfindung soll das Verfahren der eingangs genannten Art so ausgestaltet werden, daß auch der Einsatz digitaler Leittechnik, die Anwendung sogenannter Identifizierungskriterien und die anschließende Vorrangbildung ermöglicht werden. Insbesondere sollen die Vorteile der digitalen Technik (vor allem verbesserte Rechenmöglichkeiten und damit die Anwendung sogenannter analytischer Redundanz) so genutzt werden, daß die notwendigen Sicherheitsmargen verringert werden, dabei aber trotzdem gleich große oder gar noch größere Zuverlässigkeit als sie durch die bisherige Leittechnik erreichbar ist, nachweisbar verwirklicht wird.

Erfindungsgemäß wird die gestellte Aufgabe mit einem Verfahren der eingangs genannten Art gemäß Kennzeichen des Anspruchs 1 durch die folgenden Maßnahmen gelöst:

a) in mindestens zwei, jeweils mehrkanaligen und zueinander diversitären Rechensystemen werden über Signalbewertungsstufen aus den Eingangssignalen analoge oder binäre Informationen erzeugt, welche anomalie-signifikante Prozeßparameter der Anlage, sogenannte Teilkriterien $x_i$, liefern;

b) die Teilkriterien $x_i$ werden einer oder mehreren Signalvorrangstufen zugeführt, welche jeweils die Information der Teilkriterien $x_i$ nutzen, ein störungs-, störfall- oder situations-signifikantes Identifizierungskriterium $X_k$ als - gegebenenfalls zeitabhängige - Funktion $X_k(t) = f(x_i)$ der Teilkriterien $x_i$ zu ermitteln, welches als Schlüsselwert zur Auswahl der jeweils am besten geeigneten Gegenmaßnahmen dient,

c) die Vorrangbildung hinsichtlich der zu treffenden Gegenmaßnahmen erfolgt vorzugsweise durch Bestätigung oder Korrektur des Identifizierungskriteriums $X_k$ abhängig von einer die Wahrscheinlichkeit korrekter Identifizierung angebenden Kennzahl $Y_k$, wobei die Kennzahl $Y_k$ als - ggf. zeitabhängige - Funktion $Y_k(t) = f(y_i)$ von Teilkennzahlen $y_i$ ermittelt wird.

Vorteilhafte Weiterbildungen dieses Verfahrens sind in den Ansprüchen 2 bis 9 angegeben. Bevorzugt werden von den zueinander diversitären Rechensystemen nach Anspruch 1 dem einen oder einer Gruppe dieser Rechensysteme ereignisorientierte Identifizierungskriterien $X_k$ und dem anderen Rechensystem oder einer anderen Gruppe von Rechensystemen symptom-orientierte Identifizierungskriterien $X_k$ zugrundegelegt. Vorteilhaft ist es auch, wenn zur Erkennung ein und desselben Störfalls im Sinne einer analytischen Redundanz mehrere vollständig diversitäre Identifizierungskriterien $X_k$ herangezogen werden, so daß aus dieser Mehrzahl von Identifizierungskriterien dasjenige mit der höchsten Priorität ausgewählt werden kann. Dies gelingt vorzugsweise durch Bildung von die Wahrscheinlichkeit korrekter Identifizierung angebenden Kennzahlen $Y_k$.

Wenn in einer oder mehreren Signalvorrangstufen eine Vorrangbildung hinsichtlich eines oder mehrerer Identifizierungskriterien $X_k$ getroffen wurde, so wird gemäß einem weiteren Merkmal der Erfindung mittels einer nachgeschalteten und zur Ansteuerung von Stellgliedern vorgesehenen Maßnahmen-Auswahlstufe jeweils diejenige Maßnahmenkombination angewählt, welche die am besten geeigneten Gegenmaßnahmen gegen die dem jeweils ermittelten Identifizierungskriterium $X_k$ entsprechende Störung oder unerwünschte Situation umfaßt.

Das Identifizierungskriterium $X_k$ oder mehrere solcher Kriterien können grundsätzlich in analoger oder binärer Form vorliegen. Eine Analogform der Identifizierungskriterien $X_k$ erhält man gemäß einem weiteren Merkmal der Erfindung dadurch, daß innerhalb der jeweiligen Signalbewertungsstufe die Eingangssignale einer Auswahlstufe, z.B. einer zwei-von-vier-Auswahlstufe, zugeleitet werden und dem ausgewählten oder durchgelassenen Signal in einer Wichtungsstufe ein zwischen Null und 100 % (bzw. zwischen Null und 1) liegender Signalpegel aufgedrückt wird, welcher der Anomalie-Signifikanz des so erzeugten Teilkriteriums gerecht wird. Besonders einfach ist es in diesem Zusammenhang, wenn zur Bildung des Identifizierungskriteriums $X_k$ die Signalpegel der Teilkriterien $x_i$ innerhalb der jeweiligen Signalvorrangstufe einander überlagert werden.

Soll das Identifizierungskriterium $X_k$ aus einer Mehrzahl oder Vielzahl von Binärsignalen gebildet werden, so empfiehlt es sich gemäß einer Weiterbildung der Erfindung, daß innerhalb der jeweiligen Signalbewertungsstufe die Eingangssignale einer Auswahlstufe zugeleitet werden und diese Auswahlstufe die Auswahl nach einem Auswahlkriterium trifft und/oder eine gesonderte Wichtungsstufe vorgesehen ist, welche die Wichtung nach einem Wichtungskriterium trifft, und daß am Ausgang der Signalbewertungsstufe für den Fall, daß das Eingangssignal das Auswahlkriterium und/oder das Wichtungskriterium erfüllt hat, ein binäres L-Signal als Teilkriterium $x_i$ ansteht, im anderen Falle ein binäres Null-Signal als Teilkriterium.

Zur Ableitung des Identifizierungskriteriums $X_k$ aus in binärer Form vorliegenden Teilkriterien $x_i$ hat es sich als vorteilhaft erwiesen, daß in der jeweiligen, mehreren Signalbewertungsstufen gemeinsamen Signalvorrangstufe anhand von Potentialpunkten, repräsentierend m mögliche binäre Teilkriterien $x_i$, festgestellt wird, bei wievielen, z.B. n, der Potentialpunkte je ein L-Signal ansteht, und daß aus den n von m Teilkriterien auf das Identifizierungskriterium $X_k$ geschlossen wird. Die Ableitung des Identifizierungskriteriums $X_k$ aus n in binärer Form vorliegenden Teilkriterien $x_i$ kann noch dadurch verfeinert werden, daß in die m-von-n-Analyse der Teilkriterien auch deren Art bzw. die Lage der n L-Signal führenden Potentialpunkte innerhalb der Menge der m möglichen Potentialpunkte eingeht.

Gemäß einer bevorzugten Verfahrensvariante werden zur Bildung der Teilkennzahlen $y_i$ innerhalb einer Kennzahlenbildungsstufe die Eingangssignale einer Auswahlstufe zugeleitet, wobei diese Auswahlstufe selbst die Auswahl mittels eines Auswahlkriteriums trifft und/oder eine gesonderte Wichtungsstufe vorgesehen ist, welche die Wichtung nach einem Wichtungskriterium trifft, und ist die Kennzahlenbildungsstufe so ausgebildet, daß an deren Ausgang für den Fall, daß das Ausgangssignal das Auswahlkriterium und/oder das Wichtungskriterium erfüllt, ein analoges Signal bestimmter Pegelhöhe als Teilkennzahl ansteht, im anderen Falle ein analoges Signal, dessen Pegel Null ist oder unterhalb eines für die Berücksichtigung der betreffenden Teilkennzahl $y_i$ maßgebenden Grenzwertes liegt.

Die vorstehend erläuterte Kennzahl in Analogform eignet sich gemäß einem weiteren Merkmal der Erfindung bevorzugt dazu, daß sie durch Summation aller ermittelten Teilkennzahlen $y_i$ eine Kennzahlenbildungsstufe gebildet wird, wobei die Kennzahl $Y_k$ z.B. dreistellig mit durch Analogwerten besetzten Einer-, Zehner- und Hunderter-Positionen ist.

Aufgrund der vorstehenden Erläuterungen kann nun eine genauere Beschreibung einer bevorzugten Ausführungsform des Verfahrens nach der Erfindung wie folgt gegeben werden: Zu jedem Identifizierungskriterium $X_k$ wird eine Kennzahl $Y_k$ der Wahrscheinlichkeit für korrekte Identifikation errechnet und der Erkennungsinformation beigegeben. Alle so entstehenden Wertepaare werden Prioritätenauswahlen, z.B. Maximumauswahlen, zugeführt. Die aus Einzelmaßnahmen bestehende Maßnahmenkombination des Identifizierungskriteriums $X_k$ mit der größten Kennzahl $Y_k$ erhält dann den Vorrang bei der Prioritätenermittlung zur Ansteuerung aller relevanten Stellglieder.

Die mit der Erfindung erzielbaren Vorteile sind vor allem darin zu sehen, daß aufgrund der analogen und/oder digitalen Signalauswertung und der verbesserten Rechenmöglichkeiten mit digitaler Technik viele nicht meßbare physikalische Größen und sinnvolle "Sicherheitsvariable" schnell, zuverlässig und genau genug berechnet werden können, und nun mit ihrer Hilfe Identifizierungskriterien $X_k$ abgeleitet werden können, die nicht nur Mindestinformationen enthalten, sondern durch Zusatzinformation sowohl in ihrer Zuverlässigkeit gegen (auch mehrere) Eingangssignalfehler resistenter gemacht werden können als auch nennenswert die Wahrscheinlichkeit korrekter Identifikation einer bestimmten Störung oder Situation (mit einer definierten Streuung) erhöhen. Die algorithmischen Möglichkeiten umfangreicherer Simulationen gestatten auch die Diversifizierung der Identifizierungskriterien $X_k$ (ereignis- und symptom-orientiert) und eine Zuordnung optimaler Gegenmaßnahmen zu jeder identifizierten Störung oder unzulässigen Situation. Es kann damit gezielt materialschonend sowohl der Stärke als auch dem zeitlichen Ablauf einer einsetzenden Störung entsprechend entgegengearbeitet werden.

Gegenstand der Erfindung ist gemäß Anspruch 10 auch eine leittechnische Einrichtung zur Durchführung des Verfahrens nach einem der Ansprüche 1 bis 10, zum selbsttätigen Schutz einer Anlage, vorzugsweise zum Schutz eines Kraftwerks, insbesondere eines Kernkraftwerks, mit einem Rechennetzwerk zur mehrfach redundanten Verarbeitung von störungs-, störfall- und situations-relevanten Eingangssignalen, welche als abfragbare Parameter der zu schützenden Anlage vorliegen und welche vom Rechennetzwerk zur Abgabe von Ausgangssignalen in Form von Auslöse- oder Stellbefehlen für Stellglieder verarbeitbar sind, wenn vorgegebene Kriterien erfüllt sind, welcher sinngemäß die eingangs gestellte Aufgabe zugrundeliegt und welche zur Lösung dieser Aufgabe die im Kennzeichen des Anspruchs 10 angegebenen Merkmale aufweist.

Vorteilhafte Weiterbildungen dieser leittechnischen Einrichtung nach Anspruch 10 sind in den Ansprüchen 11 bis 15 angegeben.

Im folgenden werden anhand der Zeichnung, in welcher mehrere Ausführungsbeispiele dargestellt sind, das Verfahren nach der Erfindung und leittechnische Einrichtungen zu dessen Durchführung noch näher erläutert. In der Zeichnung zeigen in zum Teil vereinfachter, schematischer Darstellungsweise:

Figur 1 ein Schaltschema zur Erläuterung der Zwei-von-vier-Auswahl bei leittechnischen Einrichtungen;

Figur 2 in einem Diagramm das Erreichen eines Auslösegrenzwertes aufgrund einer Zwei-von-Vier-Auswahl;

Figur 3 ein erstes grundsätzliches Ausführungsbeispiel für eine leittechnische Einrichtung nach der Erfindung unter Verwendung sowohl digitaler als auch analog arbeitender leittechnischer Komponenten in einer Funktionsblock-Darstellung;

Figur 4 in einem Diagramm die Bildung von (ggf. überbestimmten) Identifizierungskriterien $X_k$ aus Teilkriterien $x_i$ aufgrund einer Summenbildung von Teilkriteriums-Signalen in Summiereinrichtungen;

Figur 5 ein zweites grundsätzliches Ausführungsbeispiel für eine leittechnische Einrichtung mit vorwiegend digital arbeitenden Rechensystemen, die sowohl ereignis-orientierte als auch - diversitär dazu - symptom-orientierte, jeweils redundante Systeme zur Bildung von Identifizierungskriterien $X_k$ enthält, die ihrerseits auf Maßnahmen-Auswahlstufen einwirken, die den Vorrang für die am besten geeigneten Gegenmaßnahmen nach Maßgabe von Identifizierungs-Kennzahlen $Y_k$ ermitteln;

Figur 6 einen Ausschnitt des Funktionsschemas nach Figur 3, vergrößert und im Detail;

Figur 7 einen Algorithmus zur Bildung von Kennzahlen $Y_k$ für die Identifikations-Wahrscheinlichkeit mit der Möglichkeit sicherheitsrelevanter Wichtung, welche dem jeweiligen Identifizierungskriterium $X_k$ beigeordnet werden;

Figur 8 im Ausschnitt und im Detail mehrere Signalbewertungsstufen, welche Auswahlstufen und/oder gesonderte Wichtungsstufen umfassen und welche binäre Signale an nachgeschaltete (nicht näher dargestellte) Signalvorrangstufen liefern, und

Figur 9 in entsprechender Darstellung zur Funktionsblock-Darstellung wie Figur 8 Kennzahlenbildungsstufen mit Auswahlstufen und/oder Wichtungsstufen, welche in analoger Form vorliegende Signale für Teilkennzahlen $y_i$ an eine Summiereinrichtung zur Bildung der Kennzahl liefern.

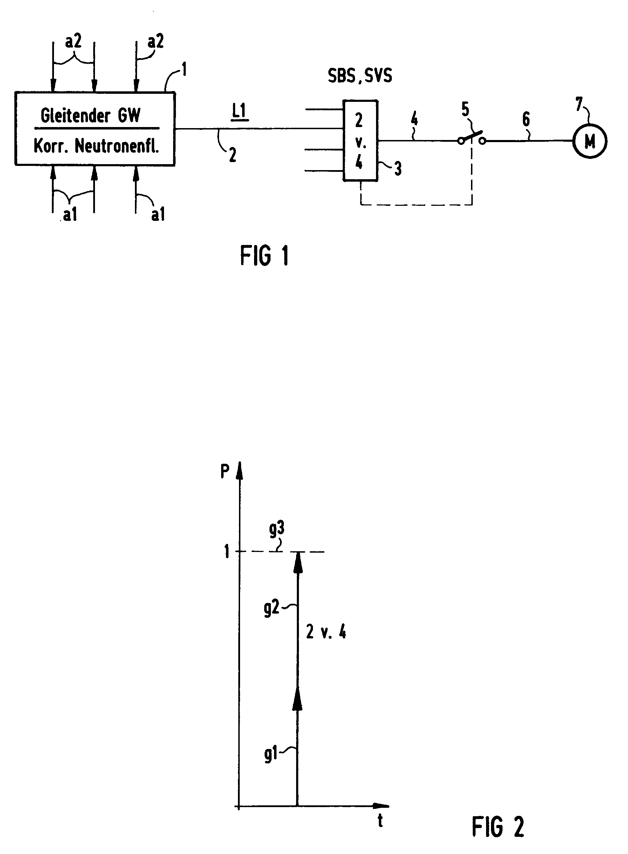

Die in Figur 1 dargestellte mehrkanalige, jedoch nur einkanalig dargestellte leittechnische Überwachungseinrichtung L1 ist ein Teil einer Überwachungs- und Schutzeinrichtung einer Anlage, z.B. eines Kernkraftwerks. Mit dem Rechensystem 1 (und vielen weiteren nicht dargestellten Rechensystemen) werden Eingangssignale, z.B. a1 = korrigierter Neutronenfluß und a2 = ein gleitender Grenzwert für den Neutronenfluß, mehrfach redundant verarbeitet. Das heißt, im vorliegenden Fall wird laufend der korrigierte Neutronenfluß a1 mit einem gleitenden Grenzwert a2 verglichen, wobei ein vorgegebner Abstand des Wertes a1 zum Wert a2 eingehalten werden muß. Die Werte a1 und a2 werden durch gesonderte analoge oder digitale Rechensysteme berechnet. Die Soll/Istwert-Differenz wird mehrkanalig - dargestellt ist nur eine Signalleitung 2 - dem Eingang eines Zwei-von-vier-Auswahl-Gatters 3 zugeführt, an dessen Ausgangsleitung 4 ein Auslösesignal entsteht, wenn mindestens zwei von vier (binären) Eingangssignalen dasselbe aussagen. Nimmt man an, daß das Gatter 3 ein Ausgangssignal "zulässiger Grenzwert redundant erreicht" durchläßt, dann wird dieser Zustand durch den geschlossenen symbolischen Schalter 5 dargestellt, welcher das Signal als Auslöse- oder Stellbefehl für Stellglieder über den Abschnitt 6 der Signalleitung 2 der Maßnahmenstufe 7 zuleitet. In diesem einfachen Fall bilden Gatter 3 und Schalter 5 sowohl eine Signalbewertungs- als auch eine Signalvorrangstufe SBS, SVS, und das vom Schalter 5 durchgelassene Signal des Teilkriteriums $x_i$ ist zugleich Identifizierungskriterium zur Betätigung der Maßnahmenstufe 7 (hier: ein Stellglied in Form eines Motors M), wobei das Stellglied M lediglich eine Maßnahmenstufe, jedoch keine Maßnahmen-Auswahlstufe repräsentiert.

Figur 2 zeigt, daß dann, wenn bei der Zwei-von-vier-Auswahl des Gatters 3 zwei Grenzwertsignale g1 und g2 wirksam werden, beide Signale zu einem Summensignal g3 addiert werden, welches den mit dem Signalpegel P = 1 bezeichneten Grenzwert erreicht, der Regelungs- oder Schutzmaßnahmen in der Maßnahmenstufe 7 veranlaßt, z.B. eine Vergrößerung der Eintauchtiefe von bestimmten Steuerstäben in den Reaktorkern, um damit eine lokale oder die integrale Neutronenflußdichte im Kern zu verringern.

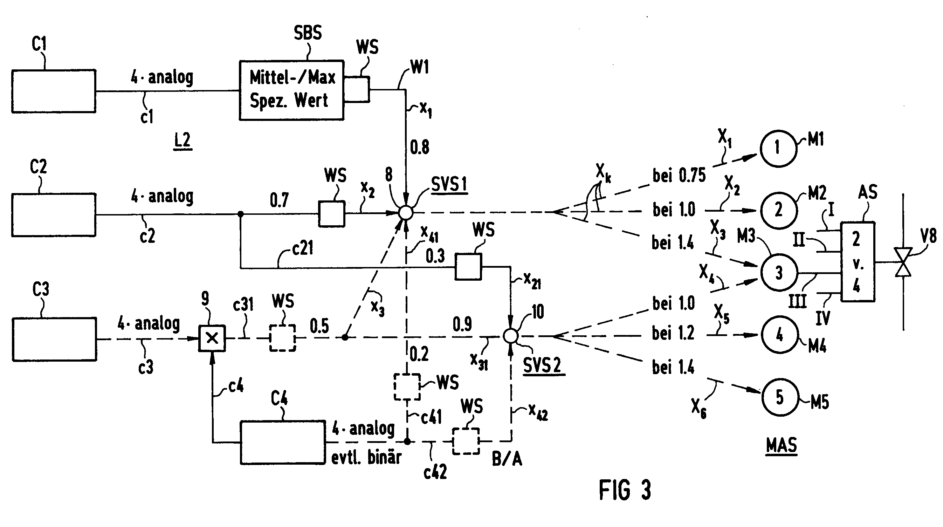

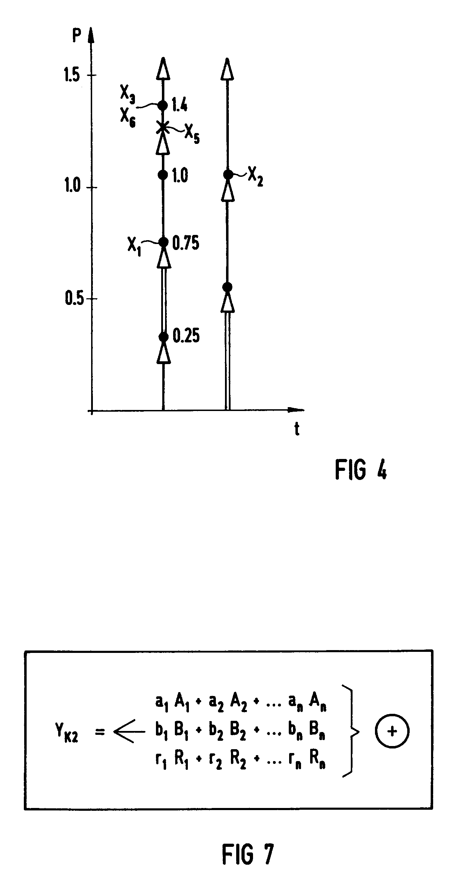

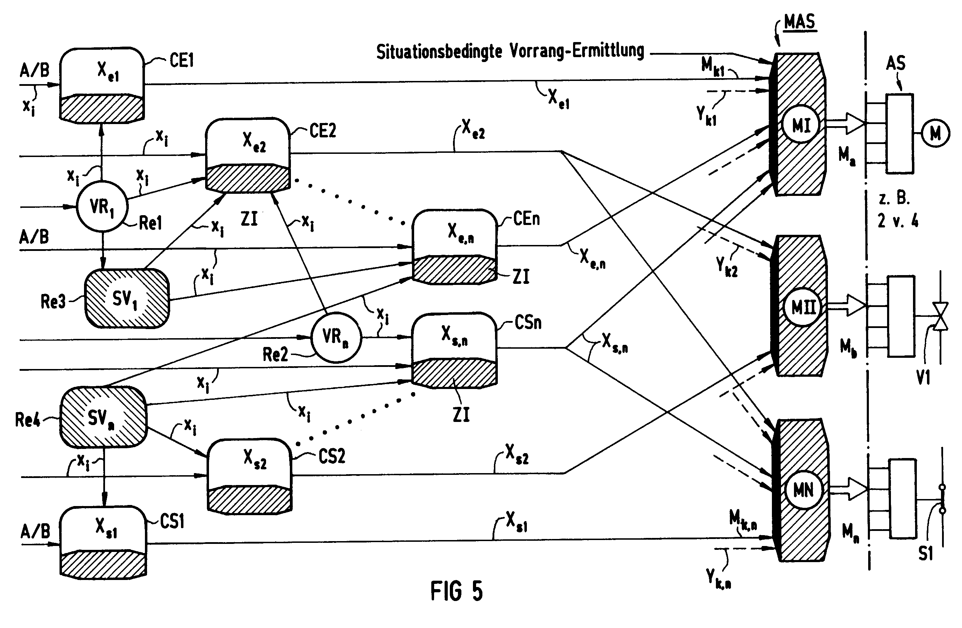

Wenn im folgenden von Rechensystemen die Rede ist, so können darunter sowohl analog als auch digital arbeitende verstanden werden, wenn nicht ausdrücklich die besondere Analog- oder Digital-Funktion hervorgehoben ist. So wird beim Ausführungsbeispiel nach Figuren 3 und 4 überwiegend von Analogtechnik Gebrauch gemacht, zumal diese Darstellung das Verständnis der Erfindung erleichtert. Dem weiteren Ausführungsbeispiel nach Figuren 5 bis 7 ist dann weitgehend Digitaltechnik zugrundegelegt.

Figur 3 zeigt eine leittechnische Einrichtung L2 gemäß einer ersten Ausführung nach der Erfindung mit drei, jeweils mehrkanaligen und zueinander diversitären Rechensystemen C1, C2 und C3, welche verschiedene sogenannte "vollständige Berechnungen" darstellen und verwirklichen, z.B. des DNB-Wertes (Departure of Nuclear Boiling bzw. Abstand gegen Filmsieden - Rechensystem C1), zur Errechnung der Wärmebilanz des Primärkreissystems und gegebenenfalls Sekundärkreissystems der Kernreaktoranlage (Rechensystem C2) oder des Dampferzeugervolumens (Rechensystem C3). Die Rechensysteme C1 bis C3 liefern vierkanalig - über ihre Hauptkanäle c1 bis c3 Eingangssignale, z.B. C1 über c1, über eine Signalbewertungsstufe SBS an eine erste Signalvorrangstufe SVS1 in Form einer Summiereinrichtung 8, welche - wie gezeigt - eine Summation der Signale (Teilkriterien $x_i$) durchführt und ein Ausgangssignal (Identifizierungskriterium $X_k$) weitergibt. Jedes Signal wird z.B. in Wichtungsstufen WS mit einem Wichtungsfaktor versehen; im Falle des Hauptkanals c1 beträgt dieser Wichtungsfaktor 0,8. Auch die übrigen Hauptkanäle c2, c3 der leittechnischen Einrichtung L2 sind mit der Signalvorrangstufe SVS1 über Wichtungsstufen WS verbunden, wobei der Block für die jeweilige Signalbewertungsstufe SBS (umfassend eine Auswahlstufe und/oder eine Wichtungsstufe WS) nur im Zuge des Hauptkanals c1 dargestellt ist (die Wichtungsstufe WS könnte auch Teil von SBS sein), bei den übrigen Hauptkanälen wurde von der Darstellung der Signalbewertungsstufe SBS abgesehen. Die Teilkriterien werden allgemein mit $x_i$ und - soweit ein einzelnes Teilkriterium behandelt wird - mit x und einer Indexzahl bezeichnet.

Vom Hauptkanal c2 gelangt eine Prozeßvariable, multipliziert mit dem Wichtungsfaktor 0,7 in der Wichtungsstufe WS, als gewichtete Prozeßvariable bzw. Teilkriterium $x_2$ zu der als erste Signalvorrangstufe SVS1 dienenden Summiereinrichtung 8. Vom Hauptkanal c3 gelangt eine in der Wichtungsstufe WS mit dem Wichtungsfaktor 0,5 multiplizierte Prozeßvariable als weiteres Teilkriterium $x_3$ zur Summiereinrichtung 8, nachdem sie im Multiplikator 9 eine multiplikative Korrektur erfahren hat. An den Multiplikator 9 ist die Ausgangsleitung c4 des der vollständigen Berechnung einer Nebenbedingung dienenden Rechensystems C4 angeschlossen; dieses speist in seine Leitungen c41 und c42 weitere analoge oder binäre Signale ein, welche im Bedarfsfalle in eine Binär- bzw. Analogform umgewandelt werden und in die Summiereinrichtung 8 oder in die Summiereinrichtung 10 einer weiteren Signalvorrangstufe SVS2 eingespeist werden (weitere Teilkriterien $x_{41}$, $x_{42}$ als anomalie-signifikante Prozeßvariable). Das Teilkriterium $x_{41}$ ist mit einem Wichtungsfaktor 0,2 belegt. Des weiteren gelangt über die Signalleitung c31 ein Wichtungssignal $x_{31}$ als Teilkriterium an die Summiereinrichtung 10, welches mit einem Wichtungsfaktor 0,9 belegt ist, und an die gleiche Summiereinrichtung 10 gelangt über die Signalleitung c21 ein weiteres, mit dem Wichtungsfaktor 0,3 belegtes Wichtungssignal als Teilkriterium $x_{21}$. Es ist also eine erste Signalvorrangstufe SVS1 mit einer Summiereinrichtung 8 vorgesehen, welcher die Wichtungssignale oder Teilkriterien $x_{41}$, $x_3$, $x_2$ und $x_1$ (im Uhrzeigersinn betrachtet) zugeführt werden. Der durch die Summiereinrichtung 10 gebildeten zweiten Signalvorrangstufe SVS2 werden die Wichtungssignale bzw. Teilkriterien $x_{21}$, $x_{42}$ und $x_{31}$ zugeführt. Die genannten Signalvorrangstufen SVS1, SVS2 verarbeiten die ihnen zugeleiteten gewichteten Eingangssignale bzw. Teilkriterien $x_i$ zu Identifizierungskriterien $X_k$, hier als $X_1$, $X_2$, ... $X_6$ bezeichnet. Die Wichtungen der einzelnen Stellbefehle sind so gewählt, daß die jeweiligen Stellgliedansteuerungen bei den Signalen $X_1$ = 0,75; $X_2$ = 1,0; $X_3$ = 1,4; $X_4$ = 1,0; $X_6$ = 1,2 und $X_6$ = 1,4 erfolgen. Aus den den einzelnen Stellbefehlen zugeordneten Richtungspfeilen ist erkennbar, daß die Stellbefehle jeweils einer Maßnahmenauswahlstufe MAS zugeleitet werden, deren einzelne Teilstufen mit M1 bis M5 bezeichnet sind. Jede der Maßnahmen-Auswahlteilstufen M1 bis M5 ist zur Ansteuerung von Stellgliedern, z.B. Stellglied V8, vorgesehen, und kann von anderen Signalvorrangstufen ebenfalls Signale erhalten (Beispiel: die Teilstufe M3). Jedes der Stellglieder, also z.B. das dargestellte Ventil V8, wird vorzugsweise über je eine Auswahlstufe AS angesteuert. Dargestellt ist eine vierkanalige Auswahlstufe AS mit den Kanälen I bis IV, wobei der Stellbefehl erst bei mindestens zwei übereinstimmenden Eingangssignalen weitergegeben wird (Zwei-von-vier-Auswahl).

Man erkennt, daß abhängig von den Signalpegeln der Stellbefehle (vgl. dazu auch die Darstellung nach Figur 4) ganz bestimmte Maßnahmen oder Maßnahmenkombinationen der Maßnahmen-Auswahlstufe MAS ausgelöst werden können. So wird bei einem Pegel des Identifizierungskriteriums $X_1$ von 0,75 dieser Wert auf die Teilstufe M1 durchgeschaltet, bei $X_2$ = = 1,0 ein entsprechender Stellbefehl auf die Auswahlstufe M2 und so weiter, wie im rechten Teil der Figur 3 und in Figur 4 schematisch dargestellt.

Maßnahmenkombinationen können nun bestimmten Ereignissen (Störfallereignissen) oder Situationen/Symptomen zugeordnet werden. Zu Ereignissen zählen beispielsweise Lastabwurf, Turbinenschnellabschaltung (TUSA), Reaktorschnellabschaltung (RESA), Pumpenabschaltung HKP (PUMA) oder Pumpenabschaltung Speisewasserpumpe (PUMA SpWP), Steuerstabfehleinfall (STA), Leistungsdichtenspitze im Kern oben (Peak oben), Leistungsdichtespitze im Kern unten (Peak unten), Speisewasser-Vorwärmer-Ausfall oder Dampferzeugerheizrohr-Leck, um nur einige Ereignisse bzw. Symptome zu nennen.

Die Identifizierungskriterien $X_k$ lassen sich nun ganz bestimmten Ereignissen oder Symptomen zuordnen, und mit Hilfe der speziellen Signale der verschiedenen Signalpegel der jeweiligen Identifizierungskriterien lassen sich wieder ganz bestimmte Abhilfemaßnahmen (im Beispiel die Abhilfemaßnahmen der Auswahlstufen M1 bis M5) einleiten. Im Beispiel nach Figur 3 entsteht also an der Summiereinrichtung 8 ein erstes Identifizierungskriterium $X_k$, welches durch $X_1$, $X_2$ oder $X_3$ repräsentiert werden kann. An der Summiereinrichtung 10 entsteht ein zweites Identifizierungskriterium $X_k$, welches durch $X_4$, $X_5$ oder $X_5$ repräsentiert werden kann.

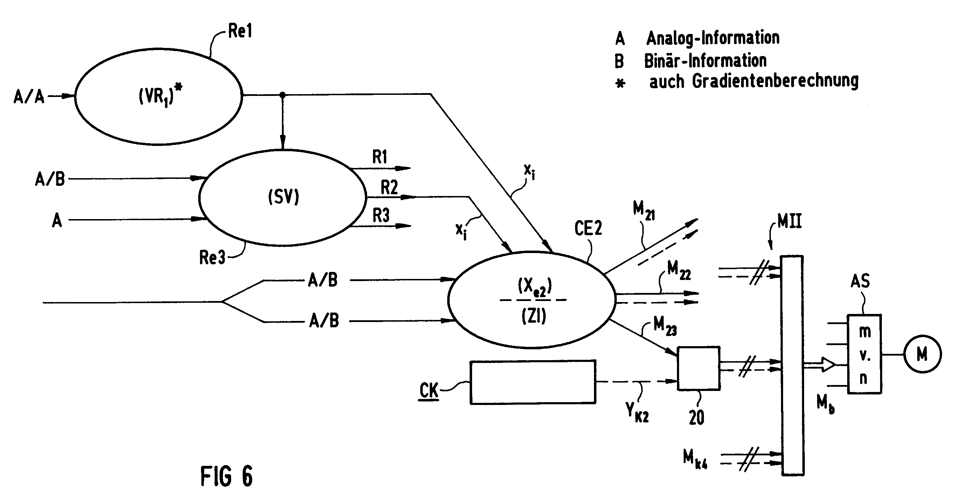

Das zweite Ausführungsbeispiel ist in den Funktionsschemata nach den Figuren 5 bis 9 dargestellt, wobei Figur 5 die Gesamtansicht zeigt und die Figuren 6 bis 9 Details zeigen. Im Funktionsschema nach Figur 5 bedeuten:

Xe1, Xe2 ... Xe,n ereignis-orientierte Identifizierungskriterien,

Xs1, Xs2 ... Xs,n symptom-orientierte Identifizierungskriteren,

$SV_1$, $SV_n$ sogenannte Sicherheitsvariable,

$VR_1$, $VR_n$ berechnete Prozeßvariable,

A/B analoge oder binäre Signale, im besonderen ein in ein Binärsignal umgewandeltes Analogsignal. Dementsprechend bedeutet A Analog-Information und B Binär-Information,

MI, MII und MN sind als Ganzes mit MAS bezeichnete Maßnahmen-Auswahlstufen,

Yk1, Yk2, Yk,n die Wahrscheinlichkeit korrekter Identifizierung angebende Kennzahlen,

Mk1, Mk,n aufgrund bestimmter Identifizierungskriterien an sich zu treffende Maßnahmen und

$M_a$, $M_b$ und $M_n$ die resultierenden, letztendlich zu treffenden Maßnahmen, die aufgrund der Signalverarbeitung in den Maßnahmen-Auswahlstufen MAS bzw. im einzelnen MI, MII und MN ausgewählt werden.

Die Rechnereinheiten, welche zur Verarbeitung von analogen und/oder binären Signalen geeignet sind und ereignis-orientierte Identifizierungskriterien Xe1, Xe2 und Xen an ihrem Ausgang abgeben, sind mit CE1, CE2 und CEn bezeichnet. Die system-orientierten Identifizierungskriterien Xs1, Xs2 und Xs,n werden von den Rechnereinheiten CS1, CS2 und CSn geliefert. Durch schraffierte Felder ZI der genannten Rechnereinheiten CE1 bis CEn sowie CS1 bis CSn ist eine Zusatzinformation angedeutet, welche in diese Rechnereinheiten eingespeist oder darin generiert werden kann. Diese Zusatzinformation ZI kann von Hilfsrechnern Re1 bis Re4 geliefert werden, wobei die Hilfsrechner Re1 und Re2 zur Berechnung von Prozeßvariablen dienen und durch Kreise dargestellt sind. Dagegen dienen die Hilfsrechner Re3 und Re4 zur Berechnung von Sicherheitsvariablen und sind als abgerundete Vierecke dargestellt. Bei der den Rechnereinheiten CE1 bis CEn sowie CS1 bis CSn zugeführten Information kann es sich um Prozeßparameter oder abgeleitete Prozeßvariable handeln, die alle mehr oder weniger anomalie-signifikant sein können und deshalb generell die Funktion von Teilkriterien $x_i$ haben können, wie es Figur 5 zeigt. Die Signalleitungen sind in Figur 5 nicht besonders bezeichnet, weil sie durch die Signale, welche sie transportieren, identifizierbar sind.

Im rechten Teil der Figur 5 sind gestrichelte Pfeile für die Übermittlung von Kennzahlen für die Wahrscheinlichkeit korrekter Identifikation $Y_{k1}$, $Y_{k2}$ und $Y_{kn}$ dargestellt; diese können einigen oder allen Identifizierungskriterien $X_k$ zugeordnet werden, was später noch erläutert wird. Durch die beispielhaften Bezeichnungen Mk1, Mk,n soll verdeutlicht werden, daß über die einzelnen Signalleitungen die notwendigen Informationen zur Auslösung der optimalen Maßnahmen gegen die von dem jeweiligen Identifizierungskrite-rium $X_k$ ermittelten Störungen oder unzulässigen Situationen gesendet werden. Die Kombination mit den Kennzahlwerten $Y_{k1}$, $Y_{k2}$, $Y_{k,n}$ für die Wahrscheinlichkeit korrekter Identifikation und deren Bewertung (z.B. Maximalwert-Auswahl) innerhalb der Auswahlstufen MAS bzw. MI, ... MN ergibt die für die aktuelle Situation zutreffendste Maßnahme (symbolisiert durch Maßnahmenpfeile $M_a$, $M_b$ und $M_n$. Im rechten Teil der Figur 5 ist außerdem angedeutet, daß die resultierenden Maßnahmen $M_a$, $M_b$ ... $M_n$ mehrkanalig, z.B. vierkanalig, über Auswahlstufen AS geleitet werden können und daß ein Plausibilitäts-Kriterium zum Beispiel erfüllt ist, wenn zwei von vier Eingangssignale übereinstimmen, so daß dann der Stellbefehl auf den Motor M, das Ventil V1 oder den Schalter S1 durchgeschaltet wird.

Die in Figuren 5 und 6 dargestellten Sicherheitsvariablen SV (allgemein) und $SV_1$, $SV_n$ im einzelnen sind im allgemeinen komplexe und meist nicht meßbare, jedoch errechenbare Variable, wie z.B. die Reaktivität, komplexere Grenzwerte oder die Reaktorleistung. Letzter kann man auf verschiedene Weise ermitteln: außen gemessene Leistung oder innen gemessene Leistung oder kalorimetrisch gemessene Leistung oder schließlich eine aus allen anderen synthetisch ermittelte Größe. Sicherheitsvariable unterscheiden sich von Prozeßvariablen (in Figuren 5 und 6 mit $VR_1$, $VR_n$ bezeichnet) darin, daß Sicherheitsvariable beliebig definiert werden können, während Prozeßvariable meist einfache Meßgrößen sind, aber auch durchaus in einigen Fällen als nicht meßbare Größen vorliegen können.

Figur 6 stellt einen Ausschnitt aus Figur 5 in detaillierter Form dar, und zwar die Rechnereinheit CE2 zusammen mit den an sie angeschlossenen Hilfsrechnern Re1, Re3 und eine nachgeschaltete Maßnahmenauswahlstufe MII. Figur 6 demonstriert die Berechnung nicht meßbarer Prozeßvariabler $VR_1$ (Hilfsrechner Re1) und einer Sicherheitsvariablen SV, z.B. die Reaktor-Leistung (Hilfsrechner Re3). Dem Hilfsrechner Re1 wird die Prozeßvariable A/A zugeführt, von diesem gelangt die (nicht meßbare) berechnete Prozeßvariable $VR_1$ zum einen zum Hilfsrechner Re3 und zum anderen zur Rechnereinheit CE2. Dem Hilfsrechner Re3 werden als Eingangsgrößen die Prozeßvariablen A/B und A zugeführt; dieser berechnet die Reaktorleistung auf dreierlei verschiedene Weise (wie bereits oben erläutert), was durch die Ausgangsgrößen R1, R2 und R3 angedeutet ist. Nur der Ausgang R2 wird zusammen mit der Prozeßvariablen $VR_1$ als Eingangs-Teilkriterium für die Rechnereinheit CE2 ausgenutzt. Dieser werden die meßbaren Prozeßvariablen A/B als weitere Eingangsgrößen zugeführt, ferner kann in diese Rechnereinheit CE2 die schon erwähnte Zusatzinformation ZI generiert oder in diese eingespeist werden. In der Rechnereinheit CE2 wird also aus mehreren binären und analogen Eingangsgrößen ein Identifizierungskriterium $X_{e2}$ berechnet, in diesem Fall ein ereignis-orientiertes Identifizierungskriterium. Die Funktion des Identifizierungskriterium $X_{e2}$ für die zu ergreifenden Maßnahmen ist sinngemäß so, wie anhand des ersten Beispiels (Figuren 3 und 4) erläutert.

Die Zusatzinformation ZI kann durch zusätzliches Einspeisen von z.B. Meßgrößen vieler andersartiger oder Einzel-Prozeßvariabler oder von Binärsignalen gewonnen werden. Diese reichert das Identifizierungskriterium $X_{e2}$ dadurch an, daß sie zwar allein keine Maßnahmen auslösen kann, jedoch wird das Identifizierungskriterium zusammen mit der Zusatzinformation stabiler in der Korrektheit der Identifikation bzw. in der "Uberbestimmung" - hier angedeutet durch die Ausgangssignale $M_{21}$, $M_{22}$, $M_{23}$. Die bei Zutreffen korrekter Identifikation optimalen Gegenmaßnahmen sind sogar auch dann möglich, wenn Teilinformationen für das Identifizierungskriterium $X_{e2}$ fehlerhaft sein sollten, woraus sich eine erhöhte Fehlertoleranz oder Fehlerresistenz ergibt. Parallel zum Identifizierungskriterium $X_{e2}$ wird die Kennzahl für die Wahrscheinlichkeit korrekter Identifikation bestimmt, welche mit $Y_{k2}$ (in diesem speziellen Falle) bezeichnet ist und allgemein mit $Y_k$ bezeichnet wird. Durch die gestrichelten Pfeile (nur einer der Pfeile ist mit $Y_{k2}$ bezeichnet) und die Funktionseinheit 20 ist verdeutlicht, daß die durch das Identifizierungskriterium $X_{e2}$ an sich gegebene Maßnahmen-Anregung jeweils aufgrund der Kennzahl $Y_{k2}$ auf die Wahrscheinlichkeit ihrer Richtigkeit überprüft wird. Durch $M_b$ ist eine resultierende Maßnahme der Maßnahmen-Auswahlstufe II symbolisiert, wobei das Signal für die resultierende Maßnahme $M_b$ mehrkanalig auf die Auswahlstufe AS gegeben wird, welche eine Zwei-von-vier-Auswahl (allgemein: m-von-n-Auswahl) trifft, bevor z.B. der Motor M einer Pumpe oder eines Stellglieds eingeschaltet wird.

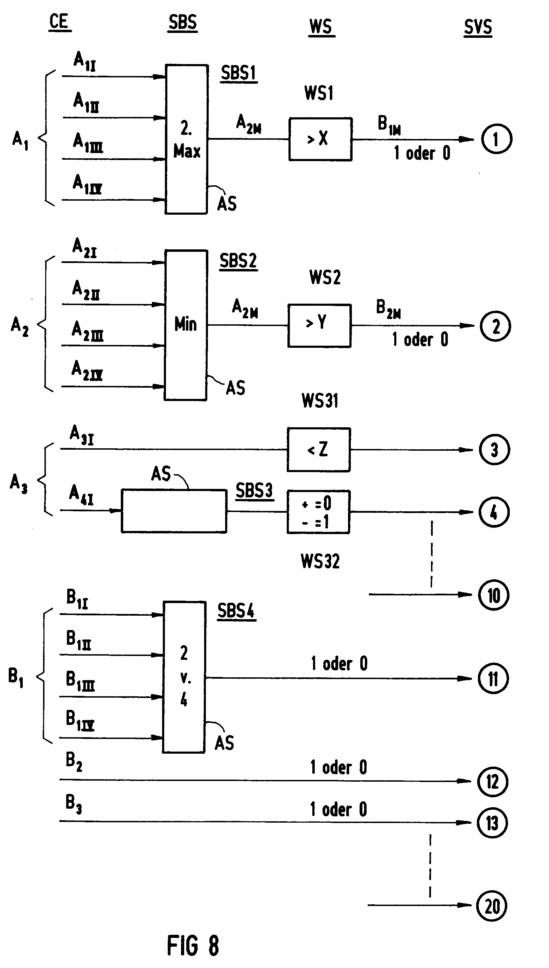

Das Diagramm nach Figur 7 symbolisiert die Herleitung des Wertes für $Y_{k2}$: Analoge Informationen verschiedener Meßwerte A1, A2 bis An werden aufgrund von Transientenstudien durch entsprechende Koeffizienten $a_1$ ... $a_n$ gewichtet und addiert. Auch binäre Informationen B1, B2 bis Bn werden mit entsprechenden Gewichtungen $b_1$ ... $b_n$ hinzugefügt und sinnvoll addiert. Aus den vorliegenden Meßwerten können auch geeignete Rechenwerte $R_1$, $R_2$ ... $R_n$ (Simulationen oder auch Gradienten zum Beispiel) errechnet und wiederum mit Wichtungsfaktoren $r_1$, $r_2$ ... $r_n$ versehen und sinnvoll addiert werden. Die Menge der verwerteten Größen und ihre Wichtungen werden in Transientenstudien ermittelt.

Jedem Maßnahmen-Anregungs-Befehl wird nun periodisch die entsprechende gerade gültige Identifikations-Wahrscheinlichkeits-Kennzahl $Y_k$ beigegeben, so daß in der Maßnahmen-Auswahlstufe MAS jedes Stellgliedes eine Maximalwert-Ermittlung aller in sie eingespeister Kennzahlen den (auch zeitveränderlichen) Vorrang einer bestimmten Maßnahme festlegt. Durch diese Kennzahl- und Vorrangbildung wird erreicht, daß der Vorrang ereignis- und situationsbedingt die optimale Gegenmaßnahme zu treffen ermöglicht, aber geändert wird, wenn sich eine geänderte Situation mit dazu anderer optimaler Gegenmaßnahme ergibt. Durch umfangreiche Analysen und Simulationsstudien kann man den Koeffizienten der Identifikations-Wahrscheinlichkeits-Kennzahl Werte zuordnen, die optimales Verhalten der gesamten Schaltung für alle Situationen, Störungen und Störfälle ergibt.

Figur 8 verdeutlicht, wie innerhalb der jeweiligen Rechnereinheit CE1 usw. bzw. CS1 usw. die Herleitung des jeweiligen Identifizierungskriteriums erfolgen kann. In Figur 8 ist die zugehörige Rechnereinheit allgemein mit CE bezeichnet; sie enthält mehrere Signalbewertungsstufen, die allgemein mit SBS und im einzelnen mit SBS1 bis SBS4 bezeichnet sind. Allgemein läßt sich feststellen, daß innerhalb der jeweiligen Signalbewertungsstufe SBS die Eingangssignale $A_1$, $A_2$ (vierkanalig), $A_3$ (zweikanalig), $B_1$ - (vierkanalig), $B_2$, $B_3$ (einkanalig), eine Auswahlstufe AS jeweils zugeleitet werden und diese Auswahlstufe AS die Auswahl nach einem Auswahlkriterium trifft (z.B. Zwei-von-vier-Auswahl) und/oder eine gesonderte Wichtungsstufe (allgemein: WS, speziell: WS1, WS2, WS31, WS32) vorgesehen ist, welche die Wichtung nach einem Wichtungskriterium trifft, und daß am Ausgang der Signalbewertungsstufe SBS für den Fall, daß das Eingangssignal das Auswahlkriterium und/oder das Wichtungskriterium erfüllt hat, ein binäres L-Signal als Teilkriterium $x_i$ ansteht, im anderen Falle ein binäres O-Signal als Teilkriterium. So trifft die Auswahlstufe AS der Signalbewertungsstufe SBS1 eine Auswahl derart, daß von vier Eingangsgrößen $A_{1I}$ bis $A_{1IV}$ jeweils nicht das größte Maximum, sondern das zweite Maximum ausgewählt wird. Dieses wird mit $A_{2,M}$ bezeichnet und in einer Wichtungsstufe WS1 dann durchgelassen, wenn es mindestens 80% eines vorgegebenen Grenzwertes ausmacht. In diesem Falle wird das Signal als Binärsignal $B_{1M}$ durchgelassen und steht dann als L-Signal bzw. als Signal "1" zur Verfügung (bei Nichtdurchlaß als Null-Signal). Bei der Signalbewertungsstufe SBS2 wird in der Auswahlstufe das Minimum aus vier Eingangsgrößen $A_{2I}$ bis $A_{2IV}$ ausgewählt, und die so ausgewählte Größe $A_{2M}$ wird in einer Wichtungsstufe WS2 nur dann durchgelassen, wenn die ausgewählte Größe $A_{2M}$ größer ist als 60% eines Grenzwertes Y. In diesem Falle gelangt das Binärsignal $B_{2M}$ als L-Signal an den Ausgang (im anderen Falle liegt nur ein Null-Signal vor).

Bei der Signalbewertungsstufe SBS3 ist für die Eingangsgröße $A_{3I}$ keine Auswahlstufe, sondern nur eine Wichtungsstufe WS31 vorgesehen mit einem Durchlaß, wenn $A_{3I}$ kleiner ist als 30% eines Grenzwertes z. Die Eingangsgröße $A_{4I}$ wird auf ihr Zeitverhalten untersucht, d.h. es wird der Gradient ermittelt, wobei bei einer positiven Steigung ein binäres L-Signal am Ausgang ansteht, bei negativer Steigung eine Null. In der Signalbewertungsstufe SBS4 wird eine Zwei-vonvier-Auswahl in einer Auswahlstufe AS aus vier Eingangssignalen $B_{1I}$ bis $B_{1IV}$ getroffen, und entsprechend steht am Ausgang ein L- oder O-Signal an. Die Signale $B_2I$ und $B_3I$ liegen bereits als L- oder O-Signal auf ihren Signalleitungen vor, so daß insoweit keine Auswahl- oder Wichtungsstufen erforderlich sind. Die Potentialpunkte sind durch eingekreiste arabische Ziffern 1 bis 20 symbolisiert (es ist nicht zu allen Potentialpunkten eine Beschaltung dargestellt, damit die Darstellung nicht zu unübersichtlich wird). Die Summe der Potentialpunkte stellt eine Signalvorrangstufe dar, denn anhand der Potentialpunkte, repräsentierend m mögliche binäre Teilkriterien $x_i$, kann man feststellen, bei wievielen, z.B. n, der Potentialpunkte je ein L-Signal ansteht. Aus den m von n Teilkriterien $x_i$ kann dann auch das Identifizierungskriterium $X_k$ geschlossen werden. In die m-von-n-Analyse der Teilkriterien $x_i$ kann auch deren Art bzw. die Lage der n L-Signal führenden Potentialpunkte innerhalb der Menge der m möglichen Potentialpunkte eingehen.

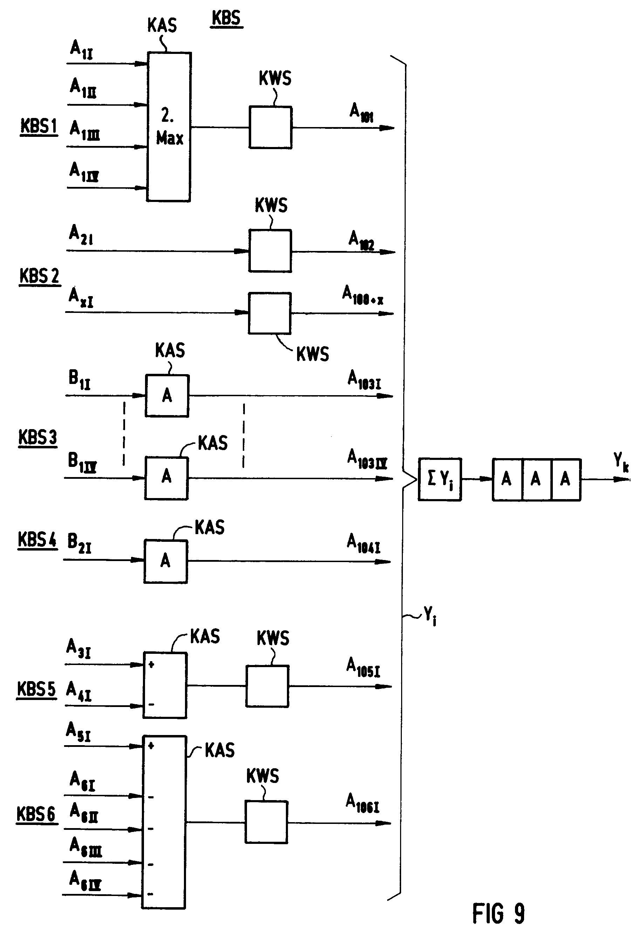

Figur 9 verdeutlicht detaillierter die Bildung der Kennzahl $Y_k$ für die Identifikations-Wahrscheinlichkeit, welche gemäß Figur 6 z.B. in der Rechnereinheit CE2 oder aber in einer gesonderten Rechnereinheit CK vorgenommen werden kann. Allgemein läßt sich sagen, daß zur Bildung der Teilkennzahlen $y_i$ innerhalb einer Kennzahlenbildungsstufe KBS die Eingangssignale $A_1$, nämlich $A_{1I}$ bis $A_{6IV}$ jeweils einer Auswahlstufe KAS (als Ganzes so bezeichnet) zugeleitet werden und diese Auswahlstufe KAS selbst die Auswahl mittels eines Auswahlkriteriums trifft und/oder eine gesonderte Wichtungsstufe KWS vorgesehen ist, welche die Wichtung nach einem Wichtungskriterium trifft. Am Ausgang der jeweiligen Kennzahlenbildungsstufe (als Ganzes: KBS und im einzelnen KBS1 bis KBS 6) steht für den Fall, daß das Eingangssignal das Auswahlkriterium und/oder das Wichtungskriterium erfüllt, ein analoges Signal bestimmter Pegelhöhe als Teilkennzahl $y_i$ an, im anderen Falle ein analoges Signal, dessen Pegel Null ist. Es ist auch möglich, in diesem anderen Fall anstelle des Null-Signals einen Wert der Teilkennzahl $y_i$ vorzusehen, der unterhalb eines für die Berücksichtigung der betreffenden Teilkennzahl maßgebenden Grenzwerts liegt. Die Eingangs- und Ausgangssignale der einzelnen Kennzahlenbildungsstufen KBS1 bis KBS6 gehen aus der nachstehenden Tabelle hervor:

| Stufe | Eingangssignale | Ausgangssignale ($y_i$) |
| --- | --- | --- |
| KBS1 | $A_{1I} - A_{1IV}$ | $A_{101}$ |
| KBS2 | $A_{2I}, A_{xI}$ | $A_{102}, A_{100+x}$ |
| KBS3 | $B_{1I} - B_{1IV}$ | $A_{103}$ |
| KBS4 | $B_{2I}$ | $A_{104I}$ |
| KBS5 | $A_{3T}, A_{4T}$ | $A_{105I}$ |
| KBS6 | $A_{5I}, A_{6I} - A_{6IV}$ | $A_{106I}$ |

Bei der Kennzahlbildungsstufe KBS1 ist sowohl eine Auswahlstufe KAS als auch eine Wichtungsstufe KWS vorgesehen, wobei z.B. ein Analogsignal $A_{101}$ mit einem Wichtungsfaktor 0,5 multipliziert wird. Bei der Kennzahlenbildungsstufe KBS2 sind innerhalb von zwei Kanälen, die je vier Unterkanäle I - IV haben, jeweils Wichtungsstufen KWS vorgesehen, wobei die Wichtungsfaktoren 0,2 bzw. 0,3 betragen. Bei der Kennzahlenbildungsstufe KBS3 sind innerhalb von vier Kanälen Auswahlstufen KAS vorgesehen, die dann, wenn das Signal den Wert 1 hat, ein Analogsignal A = 0,1 ergeben. Bei der Kennzahlenbildungsstufe KBS4 beträgt dieses Analogsignal A = 0,15. Bei der Kennzahlenbildungsstufe KBS5 wird zunächst eine Auswahlstufe vorgesehen, welche z.B. die Mindestdifferenz zweier Signale unterschiedlichen Vorzeichens durchläßt, anschließend ist eine Wichtungsstufe mit einem Wichtungsfaktor mit k = 0,33 vorgesehen. Bei der Kennzahlenbildungsstufe KBS6 wird vierkanalig die Differenz von Minus-Signalen zu einem Plus-Signal festgestellt und eine Mindest- (oder Höchst-)differenz durchgelassen (Zwei-vonvier-Auswahl), die nachgeschaltete Wichtungsstufe hat einen Wichtungsfaktor von k = 0,05. Durch Summation a11 dieser $y_i$-Teilkriterien für die Kennzahl kann man z.B. eine dreistellige resultierende Kennzahl $Y_k$ erhalten, also eine dreistellige Kennzahl mit durch Analogwerte besetzten Einer-, Zehner-und Hunderter-Positionen. Diese Kennzahl gibt dann die Identifikations-Wahrscheinlichkeit eines bestimmten Identifizierungskriteriums $X_k$ an. Von mehreren solchen Kriterien wird dann dasjenige Kriterium $X_k$ auf die Maßnahmenauswahlstufe MAS durchgeschaltet, das den höchsten Grad der Wahrscheinlichkeit seiner Richtigkeit besitzt.

Mit anderen Worten: Jedem Maßnahmen-Anregungs-Befehl wird periodisch die entsprechende, gerade gültige Identifikationswahrscheinlichekeits-Kennzahl $Y_k$ beigegeben, so daß in der Maßnahmen-Auswahlstufe MAS jedes Stellgliedes eine Maximalwertermittlung aller in sie eingespeister Kennzahlen den (auch zeitveränderlichen) Vorrang einer bestimmten Maßnahme festlegt. Durch diese Kennzahl- und Vorrangbildung wird erreicht, daß der Vorrang ereignis- und situationsbedingt die optimale Gegenmaßnahme zu treffen ermöglicht, aber geändert wird, wenn sich eine geänderte Situation mit dazu anderer optimaler Gegenmaßnahme ergibt. Durch umfangreiche Analysen und Simulationsstudien kann man den Koeffizienten der Identifikations-Wahrscheinlichkeits-Kennzahl $Y_k$ Werte zuordnen, die optimales Verhalten der gesamten Schaltung für alle Situationen, Störungen und Störfälle ergibt. Im Rahmen der Erfindung kann auch vorgesehen sein, daß ereignis-orientierte Teilkriterien $x_i$ und ein davon abhängiges Identifizierungskriterium $X_i$ mit Hilfe von Expert-Systems- und Fuzzy-Logic-Technik ermittelt werden. Darüber hinaus können die Haßnahmenauswahlstufen in der Technik künstlicher neuronaler Netze ausgeführt sein.

Die Vorteile nach der Erfindung seien im folgenden noch einmal kurz zusammengefaßt: Bei digitaler Technik können nicht meßbare Prozeßvariable, komplexere "Sicherheitsvariable" und die genannten Identifizierungskriterien mit Kennzahlen korrekter Identifizierungs-Wahrscheinlichkeit in geeigneter Weise aus den verschiedensten (digitalisierten) Informationen gebildet und korreliert werden. Letztere beide werden durch Zusatz-Informationen, die für sich allein keine Maßnahmen auslösen könnten, in der Wahrscheinlichkeit korrekten Erkennens einer bestimmten Störung noch verbessert. Bei zeitabhängig verlaufenden Störungen werden auch alle Merkmale des Transienten-Verhaltens mit in die "Sicherheitsvariablen" eingebracht, z.B. auch "stabile Gradienten". Diese aufwendige, aber präzise Art der Identifikation macht es möglich, mehrere vollständig diversitäre "Sicherheitsvariable" und Identifizierungskriterien zur Erkennung desselben Störfalls zu bilden und zu nutzen: Analytische Redundanz. Für die Funktionen der höchsten Anforderungsstufe in bezug auf (Reaktor-)Sicherheit sollten mindestens zwei dieser diversitären Identifizierungskriterien je Störung oder Störfall vorhanden sein. Manchmal besteht sogar die Möglichkeit, mehr als drei Identifizierungskriterien zu bilden. Dazu kann man dann aber auch alle verwendeten Eingangsinformationen (insbesondere die der Wahrscheinlichkeitserhöhung) in mehreren Identifizierungskriterien gleichzeitig verwenden.

Die mit diesem Verfahren hohe Wahrscheinlichkeit korrekter Identifizierung fast jeder Störung, jedes Störfalls und jeder unzulässigen Situation gestattet es, die jeweils geeignetste Gegenmaßnahmenkombination zu ergreifen.

**Patentansprüche**

1. Verfahren zum automatischen Schutz einer Anlage, vorzugsweise zum Schutz eines Kraftwerks, insbesondere eines Kernkraftwerks, wobei mit einem Rechennetzwerk Eingangssignale aus der Anlage redundant erfaßt, verarbeitet und Ausgangssignale in Form von Auslöse- und/oder Stellbefehlen für Stellglieder abgegeben werden, wenn vorgegebene Kriterien erfüllt sind,
   **gekennzeichnet durch** die folgenden Maßnahmen:
   a) in mindestens zwei, jeweils mehrkanaligen und zueinander diversitären Rechensystemen werden über Signalbewertungsstufen (SBS) aus den Eingangssignalen analoge und/oder binäre Informationen erzeugt, welche anomalie-signifikante Prozeßvariable der Anlage, sogenannte Teilkriterien $x_i$, liefern;
   b) die Teilkriterien $x_i$ werden einer oder mehreren Signalvorrangstufen (SVS) zugeführt, welche jeweils die Information der Teilkriterien $x_i$ nutzen, ein störungs-, störfall- oder situations-signifikantes Identifizierungskriterium $X_k$ als - ggf. zeitabhängige - Funktion $X_k(t) = f(x_i)$ der Teilkriterien $x_i$ zu ermitteln, welches als Schlüsselwert zur Auswahl der jeweils am besten geeigneten Gegenmaßnahmen dient;
   c) die Vorrangbildung hinsichtlich der zu treffenden Gegenmaßnahmen erfolgt vorzugsweise durch Bestätigung oder Korrektur des Identifizierungskriteriums $X_k$ abhängig von einer die Wahrscheinlichkeit korrekter Identifizierung angebenden Kennzahl $Y_k$, wobei die Kennzahl $Y_k$ als - ggf. zeitabhängige - Funktion $Y_k(t) = f(y_i)$ von Teilkennzahlen $(y_i)$ ermittelt wird.

2. Verfahren nach Anspruch 1,
   **dadurch gekennzeichnet,** daß mittels einer zur Ansteuerung von Stellgliedern vorgesehenen Maßnahmen-Auswahlstufe (MAS) aufgrund der in der Signalvorrangstufe (SVS) getroffenen Vorrangbildung jeweils diejenige Maßnahmenkombination angewählt wird, welche die am besten geeigneten Gegenmaßnahmen gegen die dem jeweils ermittelten Identifizierungskriterium $X_k$ entsprechende Störung oder unerwünschte Situation umfaßt.

3. Verfahren nach Anspruch 1,
   **dadurch gekennzeichnet,** daß innerhalb der jeweiligen Signalbewertungsstufe (SBS) die Eingangssignale einer Auswahlstufe, z.B. einer Zwei-von-Vier-Auswahlstufe (AS), zugeleitet werden und dem ausgewählten oder durchgelassenen Signal in einer Wichtungsstufe (WS) ein zwischen 0 und 100% liegender Signalpegel aufgedrückt wird, welcher der Anomalie-Signifikanz des so erzeugten Teilkriteriums gerecht wird.

4. Verfahren nach Anspruch 3,
   **dadurch gekennzeichnet,** daß zur Bildung des Identifizierungskriteriums $X_k$ die Signalpegel der Teilkriterien $x_i$ innerhalb der jeweiligen Signalvorrangstufe (SVS) einander überlagert werden.

5. Verfahren nach Anspruch 1,
   **dadurch gekennzeichnet,** daß innerhalb der jeweiligen Signalbewertungsstufe (SBS) die Eingangssignale einer Auswahlstufe (AS) zugeleitet werden und diese Auswahlstufe (AS) die Auswahl nach einem Auswahlkriterium trifft und/oder eine gesonderte Wichtungsstufe (WS) vorgesehen ist, welche die Wichtung nach einem Wichtungskriterium trifft, und daß am Ausgang der Signalbewertungsstufe (SBS) für den Fall, daß das Eingangssignal das Auswahlkriterium und/oder das Wichtungskriterium erfüllt hat, ein binäres L-Signal als Teilkriterium $x_i$ ansteht, im anderen Fall ein binäres Null-Signal als Teilkriterium.

6. Verfahren nach Anspruch 4,
   **dadurch gekennzeichnet,** daß in der jeweiligen, mehreren Signalbewertungsstufen (SBS) gemeinsamen Signalvorrangstufe (SVS) anhand von Potentialpunkten, repräsentierend m mögliche binäre Teilkriterien $x_i$, festgestellt wird, bei wievielen, z.B. n, der Potentialpunkte je ein L-Signal ansteht, und daß aus den n von m Teilkriterien $x_i$ auf das Identifizierungskriterium $X_k$ geschlossen wird.

7. Verfahren nach Anspruch 5 oder 6,
   **dadurch gekennzeichnet,** daß in die m- von-n-Analyse der Teilkriterien $x_i$ auch deren Art bzw. die Lage der n L-Signal-führenden Potentialpunkte innerhalb der Menge der m möglichen Potentialpunkte eingeht.

**8.** Verfahren nach Anspruch 1,
**dadurch gekennzeichnet,** daß zur Bildung der Teilkennzahlen $y_i$ innerhalb einer Kennzahlenbildungs-stufe (KBS) die Eingangssignale einer Auswahlstufe (KAS) zugeleitet werden und diese Auswahlstufe (KAS) selbst die Auswahl mittels eines Auswahlkriteriums trifft und/oder eine gesonderte Wichtungsstufe (KWS) vorgesehen ist, welche die Wichtung nach einem Wichtungskriterium trifft, und daß am Ausgang der Kennzahlenbildungsstufe (KBS) für den Fall, daß das Eingangssignal das Auswahlkriterium und/oder das Wichtungskriterium erfüllt hat, ein analoges Signal bestimmter Pegelhöhe als Teilkenn-zahl $y_i$ ansteht, im anderen Falle ein analoges Signal, dessen Pegel Null ist oder unterhalb eines für die Berücksichtigung der betreffenden Teilkennzahl $y_i$ maßgebenden Grenzwertes liegt.

**9.** Verfahren nach Anspruch 8,
**dadurch gekennzeichnet,** daß die Kennzahl $Y_k$ durch Summation aller ermittelten Teilkennzahlen $y_i$ einer Kennzahlenbildungsstufe (KBS) gebildet wird, wobei die Kennzahl $Y_k$ z.B. dreistellig mit durch Analogwerten besetzten Einer-, Zehner- und Hunderter-Positionen ist.

**10.** Leittechnische Einrichtung zur Durchführung des Verfahrens nach einem der Ansprüche 1 bis 9, zum selbsttätigen Schutz einer Anlage, vorzugsweise zum Schutz eines Kraftwerks, insbesondere eines Kernkraftwerks, mit einem Rechennetzwerk zur mehrfach redundanten Verarbeitung von störungs-, störfall- und situations-relevanten Eingangssignalen, welche als abfragbare Parameter der zu schützenden Anlage vorliegen und welche vom Rechennetzwerk zur Abgabe von Ausgangssignalen in Form von Auslöse- oder Stellbefehlen für Stellglieder verarbeitbar sind, wenn vorgegebene Kriterien erfüllt sind, mit den folgenden weiteren Merkmalen:
a) zwei oder mehr, jeweils mehrkanalige und zueinander diversitäre Rechensysteme umfassen jeweils mindestens eine Signalbewertungsstufe (SBS) oder sind einer solchen Signalbewertungsstufe (SBS) vorgeschaltet, wobei die jeweilige Signalbewertungsstufe (SBS) zur Erzeugung von analogen oder binären Informationen aus den Eingangssignalen eingerichtet ist, wobei die Informationen anomalie-signifikante Prozeßparameter der Anlage, sogenannte Teilkriterien $x_i$, repräsentieren,
b) den Signalbewertungsstufen (SBS) ist wenigstens eine Signalvorrangstufe (SVS) nachgeschaltet, welche Auswahl- und/oder Wichtungsstufen umfaßt und zur Verarbeitung der zugeleiteten Signale der Teilkriterien $x_i$ derart eingerichtet ist, daß ein störungs-, störfall- oder situations-signifikantes Identifizierungskriterium $X_k$ als - gegebenenfalls zeitabhängige - Funktion $X_k(t) = f(x_i)$ der Teilkrite-rien $x_i$ ermittelte wird, wobei das Identifizierungskriterium $X_k$ als Schlüsselwert zur Auswahl der am besten geeigneten Gegenmaßnahmen dient.

**11.** Einrichtung nach Anspruch 12,
**dadurch gekennzeichnet,** daß der bzw. der jeweiligen Signalbewertungsstufe (SBS) mindestens eine zur Ansteuerung von Stellgliedern vorgesehen Maßnahmenauswahlstufe (MAS) nachgeschaltet ist, welche zur Auswahl einer Maßnahmenkombination aufgrund der in einer vorgeschalteten Signalvorrangstufe (SVS) getroffenen Vorrangbildung derart eingerichtet ist, daß die am besten geeigneten Gegenmaßnahmen gegen die den jeweils ermittelten Identifizierungskriterium $X_k$ entsprechende Störung oder unerwünschte Situation eingeleitet werden.

**12.** Einrichtung nach Anspruch 10 oder 11,
**dadurch gekennzeichnet,** daß wenigstens eine Kennzahlenbildungsstufe (KBS) an eine Signalvorrangstufe (SVS) angeschlossen ist, wobei in dieser Signalvorrangstufe die Vorrangbildung hinsichtlich der zu treffenden Maßnahmenkombination durch Bestätigung oder Korrektur des Identifizierungskrite-riums $X_k$ in Abhängigkeit von einer die Wahrscheinlichkeit korrekter Identifizierung angebenden Kenn-zahl $Y_k$ gebracht ist, welche als - gegebenenfalls zeitabhängige - Funktion $Y_k(t) = f(Y_i)$ von Teilkenn-zahlen $y_i$ in der Kennzahlenbildungsstufe (KBS) ermittelt wird.

**13.** Einrichtung nach Anspruch 12,
**dadurch gekennzeichnet,** daß die Kennzahlenbildungsstufe (KBS) Auswahlstufen (KAS) und/oder Wichtungsstufen (KWS) umfaßt und daß der Kennzahlenbildungsstufe (KBS) die Prozeßparameter in Form gemessener, abgeleiteter oder errechneter Werte bzw. relevanter Teilkriterien $y_i$ zuleitbar sind, und daß diese Eingangssignale jeweils einer Auswahlstufe (KAS) und/oder einer Wichtungsstufe (KWS) zuführbar sind, wobei die Auswahlstufe (KAS) selbst die Auwahl mittels eines Auswahlkriteriums trifft und/oder in einer gesonderten Wichtungsstufe (KWS) eine Wichtung nach einem Wichtungskriterium vorgenommen wird,

wobei am Ausgang der Kennzahlenbildungsstufe (KBS) ein analoges Signal bestimmter Pegelhöhe als Teilkennzahl $y_i$ ansteht oder aber ein analoges Signal, dessen Pegel Null ist oder unterhalb eines für die Berücksichtigung der betreffenden Teilkennzahl $y_i$ maßgebenden Grenzwertes liegt, je nach dem, ob das Eingangssignal das Auswahlkriterium und/oder das Wichtungskriterium erfüllt hat oder nicht.

14. Einrichtung nach einem der Ansprüche 10 bis 13,
**dadurch gekennzeichnet,** daß ereignis-orientierte Teilkriterien $x_i$ und ein davon abhängiges Identifizierungskriterium $X_i$ mit Hilfe von Expert-Systems- und Fuzzy-Logic-Technik ermittelt werden.

15. Einrichtung nach einem der Ansprüche 10 bis 14,
**dadurch gekennzeichnet,** daß die Maßnahmen-Auswahlstufen (MAS) in der Technik künstlicher neuronaler Netze ausgeführt sind.

a2      a2

1

SBS,SVS

| Gleitender GW |
|---|
| Korr. Neutronenfl. |

L1

2

2
v.
4

3

4

5

6

7

M

a1      a1

## FIG 1

P

g3

1

g2

2 v. 4

g1

t

## FIG 2

FIG 3

EP 0 570 887 A1

**FIG 4**

$$Y_{K2} = \Longleftarrow \left. \begin{array}{l} a_1\,A_1 + a_2\,A_2 + \ldots a_n\,A_n \\ b_1\,B_1 + b_2\,B_2 + \ldots b_n\,B_n \\ r_1\,R_1 + r_2\,R_2 + \ldots r_n\,R_n \end{array} \right\} \;\oplus$$

**FIG 7**

**FIG 5**

FIG 6

A    Analog-Information
B    Binär-Information
*    auch Gradientenberechnung

EP 0 570 887 A1

FIG 8

FIG 9

Europäisches Patentamt

**EUROPÄISCHER RECHERCHENBERICHT**

Nummer der Anmeldung

EP    93 10 8015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 033 785 (ACEC)<br><br>* das ganze Dokument *<br>--- | 1-2,5-7,<br>10-12 | G21D3/04<br>G05B9/03 |
| A | EP-A-0 404 992 (SIEMENS AKTIENGESELLSCHAFT)<br>* das ganze Dokument *<br>--- | 1-2,5-7,<br>10-12 | |
| A | EP-A-0 411 869 (WESTINGHOUSE ELECTRIC CORPORATION)<br>* Spalte 3, Zeile 19 - Spalte 5, Zeile 32; Abbildung 1 *<br>--- | 1-5,8-14 | |
| A | EP-A-0 378 377 (WESTINGHOUSE ELECTRIC CORPORATION)<br>* Seite 2, Zeile 30 - Zeile 50 *<br><br>----- | 1-5,8-14 | |

|   |
|---|
| **RECHERCHIERTE SACHGEBIETE (Int. Cl.5)**<br><br>G21D<br>G05B |

Der vorliegende Recherchenbericht wurde für alle Patentansprüche erstellt

| Recherchenort | Abschlußdatum der Recherche | Prüfer |
|---|---|---|
| DEN HAAG | 31 AUGUST 1993 | DEROUBAIX P.G |

EPO FORM 1503 03.82 (P0403)